# EUROPÄISCHE PATENTSCHRIFT

(11) **EP 3 195 826 B1**
(45) Veröffentlichungstag und Bekanntmachung des Hinweises auf die Patenterteilung: **14.11.2018**
(21) Anmeldenummer: 17151445.8
(22) Anmeldetag: 13.01.2017
(51) Int. Cl.: A61C 13/00, A61C 9/00, G06K 9/03, G06T 7/30, G06T 19/20

(54) **VERFAHREN ZUM ERSTELLEN EINES DIGITALEN GEBISSMODELLS**
METHOD FOR CREATING A DIGITAL DENTAL MODEL
PROCÉDÉ DE PRODUCTION D'UN MODÈLE DENTAIRE NUMÉRIQUE

(30) Priorität: 14.01.2016 AT 102016
(43) Veröffentlichungstag der Anmeldung: 26.07.2017
(73) Patentinhaber: STEGER, Heinrich, 39031 Bruneck (IT)
(72) Erfinder: STEGER, Heinrich, 39031 Bruneck (IT)
(74) Vertreter: Torggler & Hofinger Patentanwälte

(56) Entgegenhaltungen:
- WO-A1-2014/139078
- WO-A2-2014/027024
- DE-A1-102005 040 738
- US-A1- 2015 235 104

## Beschreibung

Die Erfindung betrifft ein Verfahren zum Erstellen eines digitalen Gebissmodells, mit den Schritten digitales Erfassen von Bilddaten die zumindest einen Oberflächenabschnitt eines Zahnes oder Gebisses repräsentieren, Erstellen zumindest eines Oberflächen-Modells aus den Bilddaten, Erstellen eines Referenz-Modells aus digital erfassten Positionsdaten eines Gebisses und rechnerisches Zusammenführen des zumindest einen Oberflächen-Modells mit dem Referenz-Modell zum digitalen Gebissmodell. Weiters betrifft die Erfindung eine Vorrichtung zum Erstellen eines digitalen Gebissmodells unter Durchführung eines solchen Verfahrens mit einer ersten Erfassungsvorrichtung zum Erfassen von Bilddaten, welche zumindest einen Oberflächenabschnitt eines Zahnes oder Gebisses repräsentieren, einem Rechner, welcher aus den Bilddaten der Erfassungsvorrichtung ein Oberflächen-Modell erstellt, und einer zweiten Erfassungsvorrichtung zum digitalen Erfassen von Positionsdaten eines Gebisses, wobei durch den Rechner aus den Positionsdaten ein Referenz-Modell erstellbar ist, wobei vom Rechner das Oberflächen-Modell und das Referenzmodell zu dem digitalen Gebissmodell zusammenführbar sind.

Ein ähnliches Verfahren geht aus der AT 516 002 A1 hervor. Dabei sind vor allem die Schritte intraorales Scannen, Anfertigen eines Negativabdrucks, Scannen des Negativabdrucks und rechnerisches Zusammenführen zu einem digitalen Gebissmodell vorgesehen.

Aus der DE 10 2009 044 147 A1 geht ein Verfahren zur Erstellung eines digitalen Datenmodells hervor. Im Speziellen ist angeführt, dass zur Festlegung der Lage im Koordinatensystem die Geometrie des digitalen Oberkieferdatenmodells mit der Geometrie des digitalen Abdruckdatenmodells mittels eines Matchingverfahrens verglichen wird, um auf diese Art und Weise das digitale Oberkieferdatenmodell patientenanalog also lagerichtig im Koordinatensystem auszurichten. Es handelt sich dabei also um ein rechnergestütztes Vorgehen. Geeignete Matchingverfahren sind beim Stand der Technik bekannt. Zum Beispiel können diese auf einem ICP-(Iterativ Closest Point)Algorithmus beruhen. Dieser Algorithmus ermöglicht es allgemein gesprochen, Punktwolken aneinander anzupassen, indem Koordinatentransformationen bestimmt werden, so dass die Abstände zwischen den Punktwolken minimiert werden.

Auch aus der DE 10 2008 040 947 B4 geht ein Matchingverfahren hervor. Dabei ist im Detail angeführt, dass aus den Bildinformationen des Bildsensors die räumliche Position dieser Punkte berechnet wird. Als Matchingverfahren zum Zusammenführen von mehreren Aufnahmen in ein gemeinsames Koordinatensystem dienen Verfahren, wobei punktförmige Marker auf dem Messobjekt als übereinstimmende Punkte der verschiedenen Aufnahmen angebracht werden und die verschiedenen Aufnahmen anhand dieser Marker überlagert werden oder die verschiedenen Aufnahmen anhand von charakteristischen Merkmalen des Messobjekts, wie Erhöhungen, Vertiefungen oder charakteristischen Formen, überlagert werden können. Dabei ist zur Überlagerung von räumlichen Aufnahmen das Erkennen von drei punktförmigen Markern bzw. von drei übereinstimmenden charakteristischen Merkmalen des Messobjekts ausreichend.

Auch in der DE 10 2010 023 406 A1 wird auf ein Matching oder Merging verwiesen, wobei vor allem die Schritte optisches Erfassen von wenigsten zwei Einzelaufnahmen eines Zahn- und/oder Kieferbereichs aus unterschiedlichen Blickwinkeln, Berechnen einer Anzahl von Koordinatendaten und Berechnen von Geometriedaten wichtig sind.

Ein Verfahren zur Herstellung von Zahnersatzteilen oder Zahnrestaurationen unter Verwendung elektronischer Zahndarstellungen geht aus der WO 2004/044787 A2 hervor. Dabei wird unter anderem auf eine Matching-Routine durch Minimierung der Abstandsfehlerfunktion eingegangen. Zudem ist angeführt, dass man relativ einfach z. B. mittels einer intraoralen Kamera oder eines Fotoapparats am Patienten diese Aufnahme bzw. Datensätze erstellen kann.

Weiters betrifft die Erfindung ein Verfahren bzw. eine Vorrichtung, bei dem bzw. bei der das rechnerische Zusammenführen durch eine Bildregistrierung erfolgt. Generelle Beispiele für Anwendungsmöglichkeiten der Bildregistrierung gehen aus der US 2015/0235104 A1, aus der WO 2014/027024 A2, aus der DE 10 2005 040 738 A1 und aus der WO 2014/139078 A1 hervor.

Die Aufgabe der vorliegenden Erfindung besteht nun darin, ein alternatives bzw. verbessertes Verfahren und eine alternative bzw. verbesserte Vorrichtung zu schaffen.

Dies wird durch ein Verfahren mit den Merkmalen von Anspruch 1 gelöst. Demnach ist erfindungsgemäß vorgesehen, dass vor dem oder beim rechnerischen Zusammenführen eine Unterteilung der, vorzugsweise als Punktmenge vorliegenden, Positionsdaten des Referenzmodells der Zähne des Unterkiefers oder des Oberkiefers in unveränderliche, zahnstellungsspezifische Daten und in veränderliche, oberflächenspezifische Daten erfolgt. Diese Unterteilung oder Aufteilung kann von einem Bediener mittels eines Computers händisch durchgeführt werden. Es können aber auch durch eine Erkennungsvorrichtung die zahnstellungsspezifischen Daten und die oberflächenspezifischen Daten festlegbar sein. Beim rechnerischen Zusammenführen durch die Bildregistrierung sind dann nur die oberflächenspezifischen Daten des Referenzmodells und die Bilddaten des Oberflächen-Modells veränderbar. Demnach werden also die Bilddaten dem Referenzmodell übergestülpt. Das Referenzmodell wird beim oder vor dem rechnerischen Zusammenführen also soweit "ausgeweidet", dass von diesem hauptsächlich die Stellung der Zähne zueinander übrig bleibt. Sämtliche Details betreffend die Oberfläche der Zähne wird aus den Bilddaten entnommen, mit welchen das Referenzmodell zum digitalen Gebissmodell sozusagen aufgefüllt wird. Beim Referenzmodell bleiben also nur die Daten betreffend die Stellung der Zähne zueinander unverändert, die restlichen Daten werden von den Bilddaten des Oberflächen-Modells überschrieben bzw. angepasst oder verzerrt..

Eine Bildregistrierung ist ein Prozess zur digitalen Bildverarbeitung, wobei zumindest zwei Bilder bzw. Modelle in Übereinstimmung miteinander gebracht werden. Im Speziellen wird eines der Bilder als Referenzbild (Referenz-Modell) festgelegt, das zumindest eine andere Bild wird Objektbild (Oberflächen-Modell) genannt. Um das Oberflächen-Modell ideal an das Referenz-Modell anzupassen, wird zumindest teilweise eine ausgleichende Transformation der Modelle zueinander berechnet. Das Referenzmodell und das Oberflächen-Modell repräsentieren in digitaler Form dieselben Bereiche eines Zahnes oder Gebisses. Anders ausgedrückt enthalten das Referenzmodell und das Oberflächen-Modell zumindest vergleichbare Teilbereiche desselben Zahnes, derselben Zähne oder desselben Gebisses. Dies bedeutet, dass das Referenzmodell, vorzugsweise immer, einen vergleichbaren Bereich zu dem zumindest einen Objektbild aufweist, anhand dessen dann die Ausrichtung des Objektbildes an das Referenzmodell erfolgen kann. Somit ist auch eine Entzerrung möglich. Es werden nicht - wie nach Stand der Technik - mehrere Objektbilder miteinander verglichen und zu einem Gebissmodell zusammengefügt, sondern die einzelnen Bildaufnahmen des Oberflächen-Modells werden anhand des Referenzmodelles ausgerichtet und gegebenenfalls entzerrt. Eine Anpassung von Objektbildern zueinander kann optional zusätzlich erfolgen.

Als Beispiel für eine gattungsfremde, also nicht bei der Erstellung von digitalen Gebissmodellen eingesetzte, Bildregistrierung kann auf die WO 2014/008613 A1 verwiesen werden, in welcher eine Bildregistrierung eines ersten graphischen 3D-Computermodells mit einem zweiten graphischen 2D- oder 3D-Computermodells ausgeführt wird.

Bevorzugte Ausführungsbeispiele des Verfahrens sind in den Unteransprüchen angeführt.

Grundsätzlich kann das im Verfahren erstellte digitale Gebissmodell ein komplettes Gebiss mit 28 Zähnen (oder 32 Zähnen mit Weisheitszähnen) abbilden. Für die vorliegende Erfindung soll aber unter einem digitalen Gebissmodell nicht zwingend ein vollständiges Gebiss verstanden werden. Vielmehr kann ein solches digitales Gebissmodell auch nur einen Teil eines Gebisses abbilden. Ein solches digitales Gebissmodell sollte zumindest zwei Zähne, vorzugsweise zumindest vier Zähne, und deren Anordnung zueinander nachbilden.

Vor allem in der Dentaltechnik kommt es aufgrund oftmals schlecht zugänglicher Bereiche des Gebisses, aufgrund von Verwackelungen und vor allem aufgrund der stark gebogenen Form des Gebisses oftmals zu Verzerrungen in den Bilddaten, wodurch der von den Bilddaten repräsentierte Oberflächenabschnitt zumindest bereichsweise nicht mit der tatsächlichen Zahn- bzw. Gebisssituation übereinstimmt. Deshalb ist bei der vorliegenden Erfindung bevorzugt vorgesehen, dass die Bilddaten des zumindest einen Oberflächen-Modells beim rechnerischen Zusammenführen in Abhängigkeit des Referenz-Gebissmodells zumindest teilweise verändert, vorzugsweise entzerrt, werden. Das heißt, es werden die Bilddaten des Oberflächen-Modells nicht nur räumlich so zum Referenz-Modell zusammengeführt, dass die Ausrichtung und Anordnung in einem gemeinsamen Koordinatensystem übereinstimmt, sondern es erfolgt eine konkrete Änderung bzw. Entzerrung der Bilddaten. Dadurch ändert sich die Oberflächenform des von den Bilddaten repräsentierten Oberflächenabschnitts zumindest teilweise. Anders ausgedrückt: Wenn die Bilddaten eine Punktmenge in einem dreidimensionalen Raum repräsentieren, dann ändert sich die Position zumindest einiger Punkte der Punktmenge relativ zu den anderen (unveränderten) Punkten der Punktmenge.

Ein Problem bei Bilddaten von mehreren Zähnen eines Gebisses besteht vor allem darin, dass beim Erfassen zwar die Oberflächenform der einzelnen Zähne recht genau wiedergegeben wird, aufgrund der Biegung des Gebisses bzw. der nicht auf einer Linie angeordneten Zähne aber die relative Anordnung der Zähne zueinander verzerrt wird. Dies kann alternativ oder zusätzlich auch an den relativ großen Abständen zwischen den Backenzähnen und/oder an fehlenden Referenzpunkten zum Zusammenrechnen liegen. Deshalb ist bei einem bevorzugten Ausführungsbeispiel der vorliegenden Erfindung vorgesehen, dass das Oberflächen-Modell des Zahnes oder Gebisses zumindest einen Zahnabschnitt und zumindest einen Zahnzwischenraum repräsentiert, wobei beim rechnerischen Zusammenführen mittels Bildregistrierung die den zumindest einen Zahnzwischenraum repräsentierenden Bilddaten in Abhängigkeit vom Referenz-Modell zumindest teilweise verändert, vorzugsweise entzerrt, werden. Somit wird der detaillierte Teil des Bilddatensatzes, welcher den Zahnabschnitt repräsentiert, kaum oder nur unwesentlich verändert, während der Zahnzwischenraum (welcher einem Hohlraum oder Zahnfleisch entspricht) entsprechend in Abhängigkeit des Referenz-Modells angepasst wird.

Bei einem Ausführungsbeispiel kann vorgesehen sein, dass sich nur die den zumindest einen Zahnzwischenraum repräsentierenden Bilddaten des Oberflächen-Modells ändern. Alternativ kann aber auch je nach Stärke oder Ort der Verzerrung vorgesehen sein, dass höchstens 20 %, vorzugsweise höchstens 10 %, der Bilddaten des zumindest einen Zahnabschnitts bei der Bildregistrierung veränderbar sind. Umgekehrt ausgedrückt kann also vorgesehen sein, dass die Bilddaten des zumindest einen Zahnabschnitts des Oberflächen-Modells beim rechnerischen Zusammenführen mittels Bildregistrierung zu zumindest 80 %, vorzugsweise zu zumindest 90 %, unverändert bleiben. Je nach Anwendungsfall können diese Werte auch variieren.

Um zu starke Entzerrungen der Zahnzwischenräume zu vermeiden, ist bevorzugt vorgesehen, dass der Zahnabschnitt zumindest einen an den Zahnzwischenraum angrenzenden Randbereich aufweist, wobei dieser zumindest eine Randbereich eine Breite von maximal 10 % der maximalen Gesamtbreite des Zahnabschnitts aufweist und wobei, vorzugsweise nur, die Bilddaten des zumindest einen Randbereichs des Zahnabschnitts beim rechnerischen Zusammenführen mittels Bildregistrierung zumindest teilweise verändert, vorzugsweise entzerrt, werden. Somit werden die Zahnzwischenräume und die angrenzenden Randbereiche in Abhängigkeit des Referenz-Modells entzerrt, während der Großteil der (detaillierten) Bilddaten des Zahnabschnitts gleich bleiben. Dadurch ist einerseits eine exakte Positionierung der Zähne zueinander anhand des Referenz-Modells und andererseits eine möglichst genau Wiedergabe der Oberflächenform des Zahns anhand des (nicht oder kaum veränderten) Oberflächen-Modells garantiert.

Die Unterscheidung in Zahnabschnitt und Zahnzwischenraum kann beispielsweise durch einen Techniker erfolgen, welcher an einem auf einem Bildschirm dargestellten Oberflächen-Modell die Bereiche festlegt bzw. markiert. Bevorzugt wird dies allerdings vom Rechner selber über eine Erkennungsvorrichtung gelöst, welche später noch beschrieben wird.

Das digitale Erfassen von Bilddaten des zumindest einen Oberflächenabschnitts kann beispielsweise durch eine oder mehrere Aufnahmen, zum Beispiel in Form von Fotos, erfolgen. Dieses digitale Erfassen muss auch nicht direkt im Mund erfolgen, sondern es kann auch ein (möglichst detaillierter) Abdruck die Basis für das Erfassen dieser Bilddaten bilden. Bevorzugt ist allerdings vorgesehen, dass das digitale Erfassen von Bilddaten des zumindest einen Oberflächenabschnitts des zumindest einen Zahnes oder Gebisses durch intraorales Scannen am Patienten mit einer von Hand führbaren, mobilen Scanvorrichtung durchgeführt wird. Es können auch andere Geräte zum Erfassen der Oberflächenform verwendet werden, wie zum Beispiel ein stationärer Streifenlichtscanner, welcher zum Erfassen von Gebissmodellen verwendet wird.

Bezüglich des Referenz-Modells ist erfindungsgemäß vorgesehen, dass das Referenz-Modell aus digital erfassten Positionsdaten eines Gebisses erstellt wird. Es sind also vor allem die Positionsdaten des Gebisses in einem Koordinatensystem wichtig, Details der Oberfläche sind dagegen nebensächlich bzw. weniger entscheidend. Diese Positionsdaten können aber ebenso wie beim Oberflächen-Modell auf Bilddaten basieren. Hierzu kann vorgesehen sein, dass die Positionsdaten weniger hoch aufgelöst sind als die Bilddaten. Im Speziellen kann die Auflösung der Bilddaten doppelt so hoch, vorzugsweise fünfmal so hoch, wie die Auflösung der Positionsdaten sein.

Bevorzugt ist vorgesehen, dass die Positionsdaten die Stellung von mehreren Zähnen eines Oberkiefers oder eines Unterkiefers zueinander repräsentieren. Besonders bevorzugt ist vorgesehen, dass die Positionsdaten des Referenzmodells unveränderlich sind. Anders ausgedrückt, ist die Stellung der Zähne zueinander im Referenzmodell und im digitalen Gebissmodell identisch. Das heißt, die Bilddaten werden an das Referenzmodell angepasst.

Auch beim Referenz-Modell gilt, gleich wie beim Oberflächen-Modell, dass die Positionsdaten auf Basis einer oder mehrerer Aufnahmen (z. B. Fotos) erkannt bzw. errechnet werden. Dies kann direkt im Mund erfolgen. Bevorzugt sind zwei alternative (oder sich ergänzende) Varianten vorgesehen: Das digitale Erfassen der Positionsdaten des Gebisses kann entweder durch Scannen eines mechanischen Negativabdrucks des Gebisses, welcher durch Drücken zumindest der Spitzen des Gebisses in eine formbare Masse angefertigt wird, oder auf Basis eines zwei- oder dreidimensionalen Aufnahmen bzw. Fotos des Gebisses erfolgen.

Es können auch sonst dem Zahntechniker schon bekannte Methoden verwendet werden, wie das Scannen eines Positivmodells. Beispielsweise sind nicht nur optische Verfahren für die Erstellung eines digitalen Referenz-Modells denkbar. Vielmehr ist auch ein mechanisches bzw. tastendes Verfahren möglich. Hierzu kann auf eine Platte gebissen werden, auf welcher sich in Bissrichtung nebeneinander angeordnete und bewegbar gelagerte Stifte befinden, deren Lageveränderung registriert wird. So kann punktweise ein Referenz-Modell erstellt werden. Alternativ kann auch eine z. B. 5 mm dicke Bissschablone vorgesehen sein, welche aus einem weichen Material besteht. Sobald man auf diese Schablone beißt, wird die Verformung des Materials z. B. über Spannungssensoren aufgezeichnet und so wiederum das Referenz-Modell R errechnet.

Die Bilddaten sind in einer Bilddatei gespeichert. Eine Bilddatei ist eine Form, binär codierte Daten elektronisch zu speichern. Der Inhalt der Bilddatei wurde entweder digital errechnet (zum Beispiel ein errechnetes Bild) oder durch Analog-Digital-Wandlung digitalisiert und kann daher vom menschlichen Betrachter unmittelbar weder als Bild erkannt noch als Text gelesen werden. Zur Visualisierung wird ein Gerät benötigt, das den Inhalt wieder in analoge Daten zurückwandelt (sog. Digital-Analog-Wandlung). Ein solches Gerät ist z. B. ein Computer bzw. Rechner, der mit Hilfe einer Bildbetrachtungssoftware das Bild an einem Bildschirm visualisieren kann.

Je nachdem in welcher Form die Bilddaten (bzw. Positionsdaten) erzeugt wurden, kann daraus ein zweidimensionales oder dreidimensionales Oberflächen-Modell oder Referenz-Modell abgeleitet werden. Bevorzugt ist sowohl das Oberflächen-Modell als auch das Referenz-Modell dreidimensional. Im Speziellen ist demnach vorgesehen, dass das Referenz-Modell und das Oberflächen-Modell jeweils als Punktmenge in einem dreidimensionalen Koordinatensystem vorliegen.

Um eine Vereinfachung der Bildregistrierung zu erreichen, kann vorgesehen sein, dass beim rechnerischen Zusammenführen das Oberflächen-Modell anhand von Markern über das Referenz-Modell gelegt wird. In einem bevorzugten Anwendungsfall werden diese im Mund des Patienten platziert und bei der Aufnahme der Referenzdaten und/oder der Oberflächendaten erfasst.

Weiters ist bevorzugt vorgesehen, dass das Oberflächen-Modell zumindest zwei verschiedene Zähne aufweist, wobei diese zumindest zwei Zähne bei der Bildregistrierung, vorzugsweise unabhängig voneinander, mit dem Referenz-Modell rechnerisch zusammengeführt werden. Anders ausgedrückt können aus Bilddaten zumindest zwei verschiedene Oberflächen-Modelle erstellt werden, welche jeweils im Wesentlichen einen Zahn repräsentieren, wobei diese zumindest zwei Oberflächen-Modelle bei der Bildregistrierung, vorzugsweise unabhängig voneinander, mit dem Referenz-Modell rechnerisch zusammengeführt werden. Somit muss das Oberflächen-Modell kein einzelnes zusammenhängendes Modell bilden. Vielmehr kann eine Vielzahl von Oberflächen-Modellen jeweils einen Zahn repräsentierten, welche dann beim rechnerischen Zusammenführen über das Referenz-Modell "gelegt" werden, wodurch das digitale Gebissmodell sozusagen aus einer Vielzahl von Modell-Zähnen auf Basis des Referenz-Modells zusammengefügt wird.

Die Aufgabe, eine alternative bzw. verbesserte Vorrichtung zu schaffen, wird durch eine Vorrichtung mit den Merkmalen von Anspruch 13 gelöst. Demnach ist vorgesehen, dass der Rechner eine Bildregistrierungsvorrichtung aufweist oder mit dieser signaltechnisch verbunden ist, wobei durch die Bildregistrierungsvorrichtung vom Rechner das Oberflächen-Modell und das Referenz-Modell zu dem digitalen Gebissmodell zusammenführbar sind, vom Rechner vor dem oder beim rechnerischen Zusammenführen eine Unterteilung der Positionsdaten des Referenzmodells der Zähne in unveränderliche, zahnstellungsspezifische Daten und in veränderliche, oberflächenspezifische Daten durchführbar ist. Die Bildregistrierungsvorrichtung ist ein Softwaretool und kann vom Rechner ausgeführt werden.

Weiters ist vorgesehen, dass es grundsätzlich aber auch möglich wäre, dass mit der ersten Erfassungsvorrichtung auch die Positionsdaten für das Referenz-Modell erfasst werden.

Wie bereits erwähnt, wäre es grundsätzlich möglich, dass ein Techniker über eine geeignete Software festlegt, welche Bereiche des Oberflächen-Modells die Zahnabschnitte und welche die Zahnzwischenräume sind. Bevorzugt ist allerdings vorgesehen, dass die Vorrichtung eine Erkennungsvorrichtung (z. B. in Form eines auf dem Rechner ausführbaren Softwaretools) aufweist, durch welche die Bilddaten des Oberflächenmodells automatisch in zumindest einen Zahnabschnitt und in zumindest einen Zahnzwischenraum repräsentierende Bilddaten unterteilbar sind. Diese automatische Unterteilung kann anhand von Farbinformationen erfolgen. Beispielsweise kann die Erkennungsvorrichtung auf Basis von Farb- bzw. Schattierungsunterschieden aus den Bilddaten erkennen und festlegen, wo sich ein Zahnabschnitt und wo sich ein Zahnzwischenraum befindet. Die Zuordnung kann aber auch anhand der Zahnform erfolgen, da die Form der Zähne ähnlich ist und so die Erkennungsvorrichtung (Software) einzelne Zähne aus einem Zusammenschluss erkennen und so auch Randbereiche definieren kann. Zu den Zahnzwischenräumen ist auszuführen, dass diese auf Basis der Aufnahme noch nicht vorhanden sind, da in der Realität keine direkte Verbindung zwischen den Zähnen besteht (von direktem Kontakt oder Zahnfleisch dazwischen abgesehen). Dann wird die Lücke zwischen den Zähnen mit einer Verbindung versehen, so dass eine Verbindung zwischen zwei Zähnen geschaffen wird. Dies kann über die Software vom Techniker erledigt werden oder es erfolgt automatisch über die Software.

Weiters ist bei der Vorrichtung zum Erstellen des digitalen Gebissmodells bevorzugt vorgesehen, dass durch die Bildregistrierungsvorrichtung beim Zusammenführen des Oberflächen-Modells mit dem Referenz-Modell, vorzugsweise nur, die den zumindest einen Zahnzwischenraum repräsentierenden Bilddaten in Abhängigkeit vom Referenz-Modell zumindest teilweise veränderbar, vorzugsweise entzerrbar, sind. Bevorzugt sind nur die den zumindest einen Zahnzwischenraum repräsentierenden Bilddaten veränderbar.

Auch bei der Vorrichtung ist bevorzugt vorgesehen, dass der Zahnabschnitt der Bilddaten des Oberflächen-Modells zumindest einen an den Zahnzwischenraum angrenzenden Randbereich aufweist und dieser zumindest eine Randbereich eine Breite von maximal 10 % der Gesamtbreite des Zahnabschnitts aufweist, wobei durch die Bildregistrierungsvorrichtung beim Zusammenführen des Oberflächen-Modells mit dem Referenz-Modell, vorzugsweise nur, die Bilddaten des zumindest einen Randbereichs des Zahnabschnitts zumindest teilweise veränderbar, vorzugsweise entzerrbar, sind. Der Rest behält seine Geometrie bei und wird lediglich in seiner Lage verändert. Die Festlegung des bzw. der Randbereiche kann auch über die Erkennungsvorrichtung erfolgen, welche beispielsweise automatisch aus Basis der erkannten bzw. festgelegten Zahnzwischenräume die Randbereiche festlegt.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: schematisch das Verfahren zum Erstellen eines digitalen Gebissmodells,
- Fig. 2: schematisch das Referenz-Modell,
- Fig. 3: schematisch das Oberflächen-Modell und
- Fig. 4: schematisch das entzerrte digitale Gebissmodell.

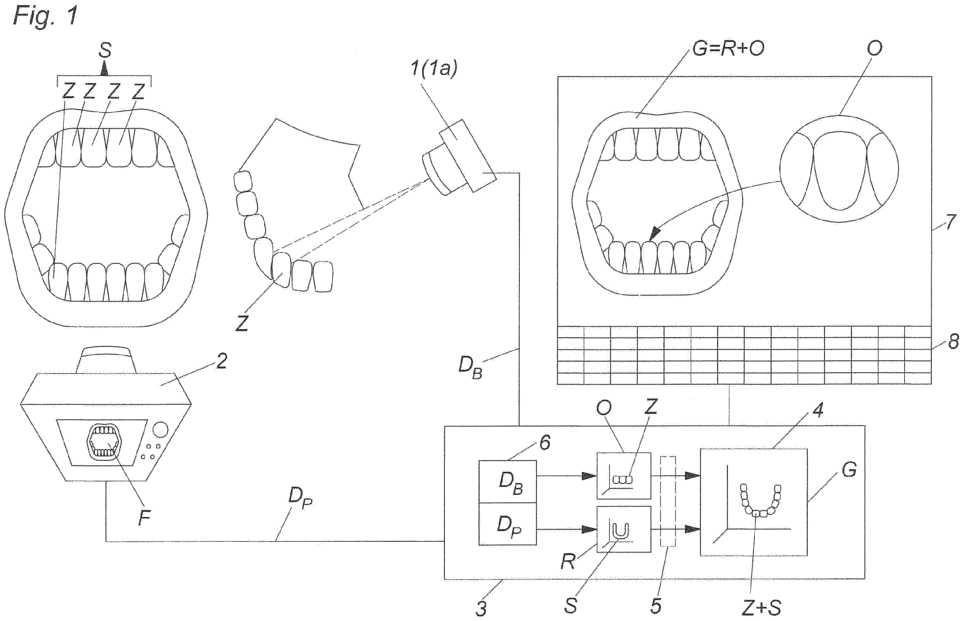

In Fig. 1 ist schematisch der Verfahrensablauf einer vorteilhaften Ausführungsform eines Verfahrens zum Erstellen eines digitalen Gebissmodells G dargestellt, wobei auch die wesentlichen Bestandteile der Vorrichtung zum Erstellen des digitalen Gebissmodells G zumindest schematisch dargestellt sind.

Dabei wird über eine erste Erfassungsvorrichtung 1 (zum Beispiel über eine mobile Scanvorrichtung 1a) im Mund eines Patienten (oder an einem Modell) ein Oberflächenabschnitt zumindest eines Zahnes Z oder eines Gebisses S erfasst. Die dabei gewonnen Bilddaten D_{B} repräsentieren den entsprechenden (erfassten bzw. gescannten) Oberflächenabschnitt. Diese Bilddaten D_{B} können in der ersten Erfassungsvorrichtung 1 gespeichert werden. Bevorzugt werden die Bilddaten D_{B} signaltechnisch an einen Rechner 3 übermittelt. Dieser Rechner 3 kann einen Speicher 6 aufweisen, in welchem die Bilddaten D_{B} gespeichert werden. Aus den Bilddaten D_{B} wird über ein entsprechendes Programm im Rechner 3 ein visualisierbares, vorzugsweise dreidimensionales, Oberflächen-Modell O der Zähne Z erstellt. In Fig. 1 ist die Dreidimensionalität des Oberflächen-Modells O durch die dargestellten drei Hauptachsen eines Koordinatensystems veranschaulicht.

Vorher, gleichzeitig oder anschließend wird über eine zweite Erfassungsvorrichtung 2 (zum Beispiel eine Digitalkamera) ein Gebiss S zumindest teilweise fotografiert oder gescannt. Dabei werden Positionsdaten Dp gewonnen, welche zumindest die Stellung zweier Zähne Z im Gebiss S zueinander repräsentieren. Diese Positionsdaten D_{P} können aus von der zweiten Erfassungsvorrichtung 2 gewonnenen Bilddaten abgeleitet werden. Sie können aber auch aus einem oder mehreren Fotos F des Gebisses S errechnet werden. Die Positionsdaten D_{P} können direkt in der zweiten Erfassungsvorrichtung 2 gespeichert werden. Bevorzugt werden die Positionsdaten D_{P} signaltechnisch an den Rechner 3 übermittelt und können dort in einem Speicher 6 gespeichert werden. Aus den Positionsdaten D_{P} wird über ein entsprechendes Programm im Rechner 3 ein visualisierbares, vorzugsweise dreidimensionales, Referenz-Modell R des Gebisses S erstellt.

Grundsätzlich ist hierzu anzuführen, dass die Bilddaten D_{B} und die Positionsdaten D_{P} im selben Digitalformat vorliegen können und somit in dieser Hinsicht zueinander keine Unterschiede aufweisen müssen. Wesentlich ist aber, dass die

Bilddaten D_{B} einen Oberflächenabschnitt zumindest eines Zahnes Z repräsentieren, während die Positionsdaten D_{P} die Stellung von zumindest zwei Zähnen Z, vorzugsweise zumindest vier Zähnen Z, besonders bevorzugt von zumindest sechs Zähnen Z, zueinander repräsentieren. Bevorzugt ist dabei vorgesehen, dass die Bilddaten D_{B} einen höheren Detailierungsgrad (mithin eine höhere Auflösung) als die Positionsdaten D_{P} aufweisen.

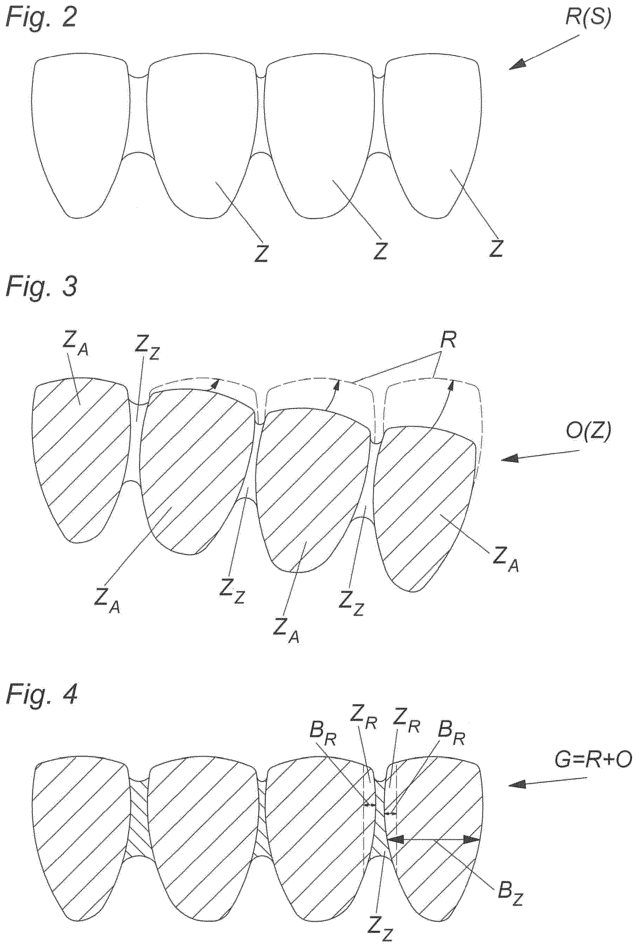

Als nächstes erfolgt der Schritt des rechnerischen Zusammenführens des zumindest einen Oberflächen-Modells O mit dem Referenz-Modell R durch eine Bildregistrierung zum digitalen Gebissmodell G. Dies wird durch eine Bildregistrierungsvorrichtung 4 durchgeführt, welche Teil des Rechners 3 ist oder mit dem Rechner 3 signaltechnisch verbunden ist. Allgemein ausgedrückt werden bei der Bildregistrierung die Bilddaten D_{B} und die Positionsdaten D_{P} miteinander verschmolzen, was beispielsweise über einen Bildschirm 7 (samt Tastatur 8) für einen Techniker visuell nachvollziehbar dargestellt werden kann. Im Konkreten wird das (detailliertere) Oberflächen-Modell O in das (weniger detaillierte) Referenz-Modell R eingepasst. Um dieses Einpassen möglichst genau und automatisch durchzuführen, kann das Oberflächen-Modell O und/oder das Referenz-Modell R durch eine (strichliert dargestellte) Erkennungsvorrichtung 5 in zumindest einen Zahnabschnitt Z_{A} und zumindest einen Zahnzwischenraum Z_{Z} unterteilt werden. Dies wird anhand der Fig. 2 bis 4 noch näher erläutert.

In Fig. 2 ist das Referenz-Modell R eines Gebisses S mit (in diesem Fall) vier Zähnen Z dargestellt. Dies kann praktisch wie dargestellt auf einem Bildschirm 7 visualisiert werden. Dieses Referenz-Modell R basiert auf zuvor erfassten Positionsdaten D_{P} eines Gebisses S. Die Stellung der Zähne Z zueinander entspricht in diesem Referenz-Modell R im Wesentlichen jenen beim tatsächlichen Gebiss S. Die genaue Oberflächenform der einzelnen Zähne Z ist in diesem Referenz-Modell R nicht vorrangig (weshalb die Zähne Z als weiße Fläche dargestellt sind). Die grobe Oberflächenform des Referenz-Modells R ist aber sehr wohl wichtig und ausschlaggebend, da ja auch über diese Oberflächenform bzw. über den Umfang die Position definiert ist, auf welcher dann die Bildregistrierung durchgeführt wird. Lediglich die Detailtiefe dieses Referenz-Modells R ist weniger ausschlaggebend. So müssen z. B. keine Hinterschnitte aufgezeigt werden. Auch die Auflösung kann geringer ausfallen.

Dagegen ist in Fig. 3 das Oberflächen-Modell O gezeigt, in welchem die Oberflächenform derselben vier Zähne Z wesentlich detaillierter wiedergegeben ist (was durch die Schraffierung angedeutet ist). Beim Erfassen des Oberflächenabschnitts der Zähne Z bzw. des Gebisses S für die Erstellung des Oberflächen-Modells O kommt es oftmals vor, dass die Stellung der Zähne Z zueinander verzerrt wird. Dies ist dadurch veranschaulicht, dass in Fig. 2 die "richtige" Stellung der Zähne Z zueinander in Form des strichliert dargestellten Referenz-Modells R erkennbar ist.

Um nun das Oberflächen-Modell O und das Referenz-Modell R rechnerisch Zusammenzuführen, wird zunächst durch einen Techniker oder bevorzugt durch eine Erkennungsvorrichtung 5 das Oberflächenmodell O in Zahnabschnitte Z_{A} und Zahnzwischenräume Z_{Z} unterteilt. Diese sind in Fig. 3 gut erkennbar.

Anschließend werden durch die Bildregistrierungsvorrichtung 4 gemäß Fig. 4 vor allem die Zahnabschnitte Z_{A} des Oberflächen-Modells O im Wesentlichen unverändert in das Referenz-Modell R eingepasst. Bei diesem Einpassen werden die Zahnzwischenräume Z_{Z} rechnerisch derart verändert bzw. entzerrt, dass die Stellung der Zähne Z zueinander dem Referenz-Modell R entspricht und die Oberflächenform der Zahnabschnitte Z_{A} gegenüber dem Oberflächen-Modell O im Wesentlichen unverändert bleibt.

Vor allem wenn stärkere Entzerrungen im Bereich der Zahnzwischenräume Z_{Z} notwendig sind, können auch Teile der Zahnabschnitte Z_{A} zusätzlich verändert bzw. entzerrt werden (was ebenfalls in Fig. 4 veranschaulicht ist). Dafür wird (beispielsweise über die Erkennungsvorrichtung 5) ein Randbereich Z_{R} des Zahnabschnitts Z_{A} festgelegt, welcher direkt an einen Zahnzwischenraum Z_{Z} angrenzt. Dieser Randbereich Z_{R} weist eine Breite B_{R} auf, welche maximal 10 % der Gesamtbreite B_{Z} des Zahnabschnitts Z_{A} beträgt. Beim rechnerischen Zusammenführen wird dann auch dieser zumindest eine Randbereich Z_{R} (mit dem angrenzenden Zahnzwischenraum Z_{Z}) in Abhängigkeit des Referenz-Modells R verändert bzw. entzerrt. Der restliche Bereich des Zahnabschnitts Z_{A} bleibt gegenüber dem Oberflächen-Modell O unverändert.

Somit bilden die virtuellen Zahnzwischenräume Z_{Z} im übertragenen Sinne Bandscheiben einer Wirbelsäule nach. Die Wirbel der Wirbelsäule (welche den Zahnabschnitten Z_{A} entsprechen) werden beim rechnerischen Zusammenführen richtig (entsprechend dem Referenz-Modell R) positioniert, wobei sich gleichzeitig die Bandscheiben (entsprechen den Zahnzwischenräumen Z_{Z}) verbiegen (entspricht dem rechnerischen Verändern bzw. Entzerren).

Das durch das erfindungsgemäße Verfahren erzeugte digitale Gebissmodell G bildet in weiterer Folge die Ausgangsbasis für das Herstellen, vorzugsweise Fräsen, eines Dentalwerkstücks in einer dentalen CNC-Bearbeitungsmaschine. Die Herstellung kann aber auch mit anderen bekannten Verfahren erfolgen, sei es ein aufbauendes Verfahren wie 3D-Druck, ein Gussverfahren oder andere abtragende Verfahren wie Fräsen, Schleifen usw.

In anderen Worten kann die Erfindung auch noch wie folgt beschrieben werden:
Bei der eingangs genannten A 521/2014 wird ein Vergleich von 3D-Daten eines Negativabdrucks, welche als Kalibrierdaten dienen, mit den 3D-Daten eines Intraoralscans durchgeführt. Dieser Intraoralscan weist aber meist Verzerrungen auf, welche mithilfe der Kalibrierdaten eliminiert werden sollen.

Bei der vorliegenden Erfindung kann nun beispielsweise auf Basis eines Fotos F das Referenz-Modell R festgelegt werden. Mit diesem Foto F wird ein großer Bereich des Mundes, genau genommen der Zähne Z, aufgenommen. Dieses Foto F kann in Form von 2D-Daten vorliegen. Sollten mehrere Fotos F zusammengerechnet werden, können sich auch 3D-Daten ergeben. Hauptaugenmerk liegt hierbei immer darauf, dass der Großteil der Zähne Z in einer Aufnahme erfasst wird. Diese gewonnenen Daten dienen dann als unverzerrtes Basismodell (entspricht sinngemäß immer dem Referenz-Modell R). Dieses Referenz-Modell R kann - muss aber nicht - auf einem Negativabdruck eines Gebisses S basieren. Dieses Referenz-Modell R enthält hauptsächlich vereinzelte Anhaltspunkte (Positonsdaten D_{P}) und keine direkten Details der Zähne Z, welche nicht auch durch das Oberflächen-Modell O abgebildet werden, wobei diese Anhaltspunkte zueinander lagerichtig liegen und unverzerrt sind.

In einem weiteren Schritt werden dann Aufnahmen der Zähne Z bzw. Zahngruppen mit einer entsprechenden Vorrichtung (erste Erfassungsvorrichtung 1) erstellt. Bevorzugt wird eine mobile Scanvorrichtung 1a (Intraoralscanner) verwendet, wodurch man als Resultat 3D-Daten (Bilddaten D_{B}) der Zähne Z erhält. Bei diesem Schritt wird der einzelne Zahn (bzw. die Zahngruppen) möglichst genau von allen Seiten über die Erfassungsvorrichtung 1 erfasst und man erhält einen Detailscan (entspricht sinngemäß immer dem Oberflächen-Modell O).

In einem dritten Schritt werden die Detailscans der Zähne Z mit dem Basismodell des Gebisses S zusammengeführt. Somit wird erreicht, dass durch das Zusammenführen der mindestens zwei Aufnahmen - einmal des Basismodells und des mindestens einen Detailscans - ein unverzerrtes Gesamtmodell des Gebisses (digitales Gebissmodell G) entsteht. Hierbei können zwei Varianten verwendet werden.

Bei der ersten Variante werden über den Intraoralscanner nur einzelne Zähne Z mit oder ohne Ansätze der Nachbarzähne detailliert eingescannt. Diese werden dann über das Basismodell gematcht. Da das Basismodell (Referenz-Modell R) die nötigen Informationen über die richtige Lage und Orientierung der einzelnen Zähne Z enthält, kann der Detailscan (Oberflächen-Modell O) des einzelnen Zahnes Z mit einem Bildregistrierungsverfahren über das 3D-Basismodell gelegt werden - sodass die geringste Abweichung zwischen den beiden Geometrien erreicht wird - und befindet sich somit an der richtigen Position im Kiefer und besitzt zudem die richtige Orientierung. Die so positionierten Zähne können dann über die Software oder manuell miteinander verbunden werden. So kann Schritt für Schritt dann ein Gesamtmodell (digitales Gebissmodell G) des Kiefers erstellt werden, welches alle Details beinhaltet, welche auf Basis einer optischen Aufnahme möglich sind. Bei dieser Variante ist es auch möglich, dass anstelle eines 3D-Basismodells einfach ein 2D-Basismodell verwendet wird. Über eine entsprechende Software und den dafür nötigen Algorithmus werden die Zähne Z dann zueinander ausgerichtet, indem markante Punkte des Fotos bzw. Basismodells mit markanten Punkten der Detailscans zusammengeführt werden.

Bei einer zweiten Variante werden nicht nur einzelne Zähne, sondern ganze Teilbereiche des Kiefers in einem Aufnahmeschritt mit dem Intraoralscanner erfasst. Wie bei der vorhergehenden Variante werden diese Detailscans dann wieder über das Basismodell mit Hilfe der Bildregistrierung gelegt. Ein weiterer Grundgedanke besteht nun jedoch bei dieser Variante darin, dass der Detailscan - sofern er Verzerrungen aufweist - über die Software an das Basismodell nicht nur angepasst, sondern auch entzerrt wird. Vereinfacht kann man sich das mit einem Balken vorstellen: Der zu scannende Balken ist im Querschnitt exakt quadratisch und weist keine Durchbiegung auf. Von diesem wird eine Aufnahme erstellt (2D oder 3D), welche die exakte unverzerrte Geometrie, ohne tiefgreifende Details, darstellt. Nun wird ein Detailscan dieses Balkens erstellt. Dieser Scan, wenn er dann dreidimensional visualisiert wird, zeigt, dass der Balken durchgebogen ist, was auf Probleme bei der Berechnung oder auch auf Probleme bei der optischen Erfassung zurückzuführen ist. Die einzelnen Teilbereiche des Balkens bleiben von solchen Verzerrungen noch weitestgehend verschont, da sie meist noch in das Aufnahmefenster einer Bilderfassung fallen. Doch ab dem Moment wo dann mehrere solcher Detailscans zusammengerechnet werden, kann es zu Fehlern kommen. Wird nun dieser Balken mit dem Basismodell des Balkens zusammengeführt, nimmt die Software automatisch eine Entzerrung vor und hebt die Durchbiegung des Balkens auf, sodass man als Resultat dann einen Gesamtscan - Balken mit Details - erhält. Als markante Punkte könnten hier die Eckpunkte oder auch Kanten des Balkens dienen, um die Anpassungen vorzunehmen. Bei der Verwendung eines Fotos (2D) sollte man die perspektivische Verzerrung berücksichtigen. Um dies besser zu kontrollieren, können Referenzpunkte bzw. -körper verwendet werden, über welche die Software zusätzliche Anhaltspunkte hat. Diese können beispielsweise im Mund des Patienten (z. B. in Form von Markern) befestigt werden.

Vor allem zur Entzerrung kann folgendes noch anders ausgedrückt beschrieben werden:
Wie bereits erwähnt, ist eine komplette Anpassung des Detailscans (Oberflächen-Modell O) an das Referenz-Modell R nicht notwendig.

Einerseits kann - wenn das Referenz-Modell R auf einem 2D-Foto basiert - davon ausgegangen werden, dass nicht ausreichend Informationen rausgeholt werden können, um direkt den Detailscan und die darin enthaltenen Punktewolken der einzelnen Zahnelemente an den Referenzscan anzupassen. Die Punktewolke der Zahnelemente wird dann lediglich in ihrer Lage im Raum als Ganzes verändert, ohne in sich entzerrt zu werden.

Andererseits kann es bei großen Arbeiten das Hauptziel sein, dass eine Entzerrung (auch bei 2D-Referenzdaten) dahingehend erfolgt, die Position/Stellung der einzelnen Zahnmodelle zueinander zu entzerren. Der Detailscan hat die exakten Daten der einzelnen Zähne Z. Werden jedoch mehrere Zahnelemente erfasst, weisen diese untereinander eine Positionsabweichung im Vergleich zur Realität auf. Dieser Versatz soll so korrigiert werden, dass in einer möglichen Variante die aufgenommene Punktewolke der einzelnen, unabhängigen Zahnelemente eingefroren wird und lediglich die Zwischenbereiche (Zahnzwischenräume Z_{Z}) und/oder Verbindungsbereiche der Zahnelemente verändert werden können. Dieser Bereich kann auch noch die Randdaten der Zahnelemente (Randbereiche Z_{R}) miteinbeziehen. Somit erfolgt bei dem Entzerrungsschritt ein Vergleich des Detail- mit dem Referenzscan, bei dem dann die Zahnelemente des Detailscans so über Referenzscan gelegt werden, dass diese zwei Datensätze eine minimale Abweichung zwischen den Punktewolken der Zahnelemente aufweisen. Verändert werden bei dieser Entzerrung lediglich die Zwischenbereiche der Zahnelemente (Zahnzwischenräume Z_{Z} und/oder Randbereiche Z_{R}). Eine Entzerrung der Punktewolke der Zahnelemente selbst wäre in diesem Fall nicht ratsam, da der Referenzscan nur generelle Positionsdaten aufweist, also wie die Zähne zueinander stehen. Im Speziellen kann also vorgesehen sein, dass beim Entzerren die Punktmenge des Referenz-Modells und die Punktmenge des Oberflächen-Modells (vor allem dessen Zahnzwischenräume Z_{Z} und/oder Randbereiche Z_{R}) rechnerisch verglichen werden und bei Vorliegen einer Abweichung zumindest eines Punktes der Punktmenge des Oberflächen-Modells vom Referenz-Modell eine Anpassung dieses zumindest einen Punktes erfolgt, indem dieser zumindest eine Punkt rechnerisch an eine Position im dreidimensionalen Koordinatensystem gesetzt wird, welche auf einer Fläche liegt, die zumindest zwischen drei, dem abweichenden Punkt nächstliegenden Punkten der Punktmenge des Referenz-Modells aufgespannt ist.

### Bezugszeichenliste:

- 1: erste Erfassungsvorrichtung
- 1a: mobile Scanvorrichtung
- 2: zweite Erfassungsvorrichtung
- 3: Rechner
- 4: Bildregistrierungsvorrichtung
- 5: Erkennungsvorrichtung
- 6: Speicher
- 7: Bildschirm
- 8: Tastatur
- G: Gebissmodell
- D_{B}: Bilddaten
- Z: Zahn
- S: Gebiss
- O: Oberflächen-Modell
- R: Referenz-Modell
- Z_{A}: Zahnabschnitt
- Z_{Z}: Zahnzwischenraum
- Z_{R}: Randbereich
- B_{R}: Breite (Randbereich)
- B_{Z}: Gesamtbreite (Zahnabschnitt)
- D_{P}: Positionsdaten
- F: Foto

## Patentansprüche

1. Verfahren zum Erstellen eines digitalen Gebissmodells (G), mit den Schritten:
- digitales Erfassen von Bilddaten (D_{B}) die zumindest einen Oberflächenabschnitt eines Zahnes (Z) oder Gebisses (S) repräsentieren,
- Erstellen zumindest eines Oberflächen-Modells (O) aus den Bilddaten (D_{B}),
- Erstellen eines Referenz-Modells (R) aus digital erfassten Positionsdaten (D_{P}) des Gebisses (S) und
- rechnerisches Zusammenführen des zumindest einen Oberflächen-Modells (O) mit dem Referenz-Modell (R) zum digitalen Gebissmodell (G),
wobei das rechnerische Zusammenführen durch eine Bildregistrierung erfolgt, **dadurch gekennzeichnet, dass** vor dem oder beim rechnerischen Zusammenführen eine Unterteilung der Positionsdaten (D_{P}) des Referenzmodells (R) der Zähne in unveränderliche, zahnstellungsspezifische Daten und in veränderliche, oberflächenspezifische Daten erfolgt.

2. Verfahren nach Anspruch 1, wobei die Bilddaten (D_{B}) des zumindest einen Oberflächen-Modells (O) beim rechnerischen Zusammenführen in Abhängigkeit des Referenz-Modells (R) zumindest teilweise verändert, vorzugsweise entzerrt, werden.

3. Verfahren nach wenigstens einem der vorangegangenen Ansprüche, wobei das Oberflächen-Modell (O) des Zahnes (Z) oder Gebisses (S) zumindest einen Zahnabschnitt (Z_{A}) und zumindest einen Zahnzwischenraum (Z_{Z}) repräsentiert.

4. Verfahren nach Anspruch 3, wobei beim rechnerischen Zusammenführen mittels Bildregistrierung, vorzugsweise nur, die den zumindest einen Zahnzwischenraum (Z_{Z}) repräsentierenden Bilddaten (D_{B}) in Abhängigkeit vom Referenz-Modell (R) zumindest teilweise verändert, vorzugsweise entzerrt, werden.

5. Verfahren nach wenigstens einem der vorangegangenen Ansprüche, wobei das digitale Erfassen von Bilddaten (D_{B}) des zumindest einen Oberflächenabschnitts des zumindest eines Zahnes (Z) oder Gebisses (S) durch intraorales Scannen am Patienten mit einer von Hand führbaren, mobilen Scanvorrichtung (1a) durchgeführt wird.

6. Verfahren nach wenigstens einem der vorangegangenen Ansprüche, wobei die Positionsdaten (D_{P}) die Stellung von zumindest zwei Zähnen (Z), vorzugsweise von zumindest vier Zähnen (Z), besonders bevorzugt von zumindest sechs Zähnen (Z), eines Oberkiefers oder eines Unterkiefers zueinander repräsentieren, wobei die Stellung der Zähne (Z) zueinander beim rechnerischen Zusammenführen zum digitalen Gebissmodell (G) unveränderlich ist.

7. Verfahren nach wenigstens einem der vorangegangenen Ansprüche, wobei das digitale Erfassen der Positionsdaten (D_{P}) des Gebisses (S) entweder durch Scannen eines mechanischen Negativabdrucks des Gebisses (S), welcher durch Drücken zumindest der Spitzen des Gebisses (S) in eine formbare Masse angefertigt wird, erfolgt oder auf Basis eines zwei- oder dreidimensionalen Fotos (F) des Gebisses (S) erfolgt.

8. Verfahren nach wenigstens einem der vorangegangenen Ansprüche, **dadurch gekennzeichnet, dass** bei der Bildregistrierung die Bilddaten (D_{B}) und Positionsdaten (D_{P}) miteinander verschmolzen werden.

9. Verfahren nach wenigstens einem der vorangegangenen Ansprüche, **dadurch gekennzeichnet, dass** die oberflächenspezifischen Daten des Referenz-Modells (R) dahingehend veränderlich sind, dass sie mit Bilddaten (D_{B}) des Oberflächen-Modells (O) aufgefüllt werden oder dass sie von den Bilddaten (D_{B}) des Oberflächen-Modells (O) überschrieben oder verzerrt werden

10. Verfahren nach wenigstens einem der vorangegangenen Ansprüche, wobei das Referenz-Modell (R) und das Oberflächen-Modell (O) jeweils als Punktmenge in einem dreidimensionalen Koordinatensystem vorliegen.

11. Verfahren nach wenigstens einem der vorangegangenen Ansprüche, wobei beim rechnerischen Zusammenführen das Oberflächen-Modell (O) anhand von Markern über das Referenz-Modell (R) gelegt wird.

12. Verfahren nach wenigstens einem der vorangegangenen Ansprüche, wobei aus Bilddaten (D_{B}) zumindest zwei verschiedene Oberflächen-Modelle (O) erstellt werden, welche jeweils im Wesentlichen einen Zahn (Z) repräsentieren, wobei diese zumindest zwei Oberflächen-Modelle (O) bei der Bildregistrierung, vorzugsweise unabhängig voneinander, mit dem Referenz-Modell (R) rechnerisch zusammengeführt werden.

13. Vorrichtung zum Erstellen eines digitalen Gebissmodells (G) unter Durchführung eines Verfahrens nach wenigstens einem der Ansprüche 1 bis 12, mit
a. einer ersten Erfassungsvorrichtung (1) zum Erfassen von Bilddaten (D_{B}), welche zumindest einen Oberflächenabschnitt eines Zahnes (Z) oder Gebisses (S) repräsentieren,
b. einem Rechner (3), welcher aus den Bilddaten (D_{B}) der ersten Erfassungsvorrichtung (1) ein Oberflächen-Modell (O) erstellt, und
c. einer zweiten Erfassungsvorrichtung (2) zum digitalen Erfassen von Positionsdaten (D_{P}) des Gebisses (S), wobei durch den Rechner (3) aus den Positionsdaten (D_{P}) ein Referenz-Modell (R) erstellbar ist,
wobei vom Rechner (3) das Oberflächen-Modell (O) und das Referenz-Modell (R) zu dem digitalen Gebissmodell (G) zusammenführbar sind, wobei der Rechner (3) eine Bildregistrierungsvorrichtung (4) aufweist oder mit dieser signaltechnisch verbunden ist, wobei durch die Bildregistrierungsvorrichtung (4) vom Rechner (3) das Oberflächen-Modell (O) und das Referenz-Modell (R) zu dem digitalen Gebissmodell (G) zusammenführbar sind, **dadurch gekennzeichnet, dass** vom Rechner (3) vor dem oder beim rechnerischen Zusammenführen eine Unterteilung der Positionsdaten (D_{P}) des Referenzmodells (R) der Zähne in unveränderliche, zahnstellungsspezifische Daten und in veränderliche, oberflächenspezifische Daten durchführbar ist.

## Claims

1. A method of producing a digital bite model (G) comprising the steps:
- digitally capturing image data (D_{B}) which represent at least one surface portion of a tooth (Z) or bite (S),
- producing at least one surface model (O) from the image data (D_{B}),
- producing a reference model (R) from digitally captured position data (D_{P}) of the bite (S), and
- computer merging of the at least one surface model (O) with the reference model (R) to give the digital bite model (G),
wherein computer merging is effected by image registration, **characterised in that** prior to or upon computer merging subdivision of the position data (D_{P}) of the reference model (R) of the teeth into invariable tooth position-specific data and into variable surface-specific data is effected.

2. A method according to claim 1 wherein the image data (D_{B}) of the at least one surface model (O) are at least partially varied, preferably equalised, in computer merging in dependence on the reference model (R).

3. A method according to at least one of the preceding claims wherein the surface model (O) of the tooth (Z) or bite (S) represents at least one tooth portion (Z_{A}) and at least one interdental space (Z_{Z}).

4. A method according to claim 3 wherein in computer merging by means of image registration preferably only the image data (D_{B}) representing the at least one interdental space (Z_{Z}) are at least partially varied, preferably equalised, in dependence on the reference model (R).

5. A method according to at least one of the preceding claims wherein digital capture of image data (D_{B}) of the at least one surface portion of the at least one tooth (Z) or bite (S) is effected by intraoral scanning on the patient with a mobile scanning device (1a) which can be guided by hand.

6. A method according to at least one of the preceding claims wherein the position data (D_{P}) represents the position of at least two teeth (Z), preferably at least four teeth (Z), particularly preferably at least six teeth (Z), of an upper jaw or a lower jaw relative to each other, wherein the position of the teeth (Z) relative to each other is invariable in computer merging relative to the digital bite model (G).

7. A method according to at least one of the preceding claims wherein digital capture of the position data (D_{P}) of the bite (S) is effected either by scanning of a mechanical negative impression of the bite (S) which is produced by pressing at least the tips of the bite (S) into a shapable material, or is effected on the basis of a two- or three-dimensional photograph (F) of the bite (S).

8. A method according to at least one of the preceding claims **characterised in that** the image data (D_{B}) and the position data (D_{P}) are blended together in image registration.

9. A method according to at least one of the preceding claims **characterised in that** the surface-specific data of the reference model (R) are variable to the effect that they are filled up with image data (D_{B}) of the surface model (O) or they are overwritten or distorted by the image data (D_{B}) of the surface model (O).

10. A method according to at least one of the preceding claims wherein the reference model (R) and the surface model (O) are respectively present as a point set in a three-dimensional coordinate system.

11. A method according to at least one of the preceding claims wherein in computer merging the surface model (O) is placed by means of markers over the reference model (R).

12. A method according to at least one of the preceding claims wherein produced from image data (D_{B}) are at least two different surface models (O) which each respectively represent substantially one tooth (Z), wherein said at least two surface models (O) are merged by computer with the reference model (R) in the image registration step, preferably independently of each other.

13. Apparatus for producing a digital bite model (G) by carrying out a method according to at least one of claims 1 to 12, comprising
a. a first capture device (1) for capturing image data (D_{B}) which represent at least one surface portion of a tooth (Z) or bite (S),
b. a computer (3) which produces a surface model (O) from the image data (D_{B}) of the first capture device (1), and
c. a second capture device (2) for digitally capturing position data (D_{P}) of the bite (S), wherein a reference model (R) can be produced from the position data (D_{P}) by the computer,
wherein the surface model (O) and the reference model (R) can be merged by the computer (3) to give the digital bite model (G), wherein the computer (3) has an image registration device (4) or is connected in signal-conducting relationship thereto, wherein the surface model (O) and the reference model (R) can be merged to give the digital bite model by the image registration device (4) of the computer (3), **characterised in that** subdivision of the position data (D_{P}) of the reference model (R) of the teeth into invariable tooth position-specific data and into variable surface-specific data can be carried out by the computer (3) prior to or upon computer merging.

## Revendications

1. Procédé de production d'un modèle dentaire numérique (G), comportant les étapes de :
- saisie numérique de données d'image (D_{B}) qui représentent au moins une portion de surface d'une dent (Z) ou d'une denture (S),
- production d'au moins un modèle de surface (O) à partir des données d'image (D_{B}),
- production d'un modèle de référence (R) à partir de données de position saisies numériquement (D_{P}) de la denture (S) et
- assemblage informatique de l'au moins un modèle de surface (O) avec le modèle de référence (R) pour donner un modèle dentaire numérique (G),
dans lequel l'assemblage informatique s'effectue par un enregistrement d'image, **caractérisé en ce qu'**avant ou lors de l'assemblage informatique, une subdivision des données de position (D_{P}) du modèle de référence (R) des dents s'effectue en données non modifiables spécifiques de la position de dent et en données modifiables, spécifiques de surface.

2. Procédé selon la revendication 1, dans lequel les données d'image (D_{B}) de l'au moins un modèle de surface (O) sont modifiées lors de l'assemblage informatique au moins partiellement en fonction du modèle de référence (R), de préférence sont égalisées.

3. Procédé selon au moins l'une des revendications précédentes, dans lequel le modèle de surface (O) de la dent (Z) ou de la denture (S) représente au moins une coupe de dent (Z_{A}) et au moins un espace interdentaire (Z_{z}).

4. Procédé selon la revendication 3, dans lequel lors de l'assemblage informatique au moyen d'un enregistrement d'image, de préférence seules les données d'images (D_{B}) représentant un espace interdentaire (Z_{z}) sont modifiées au moins partiellement en fonction du modèle de référence (R), de préférence sont égalisées.

5. Procédé selon au moins l'une des revendications précédentes, dans lequel la saisie numérique de données d'image (D_{B}) de l'au moins une portion de surface de l'au moins une dent (Z) ou une denture (S) est réalisée par scannage intrabuccal sur le patient avec un dispositif de scannage (1a) mobile pouvant être guidé manuellement.

6. Procédé selon au moins l'une des revendications précédentes, dans lequel les données de position (D_{P}) représentent la position d'au moins deux dents (Z), de préférence d'au moins quatre dents (Z), de manière particulièrement préférée d'au moins six dents (Z), d'une mâchoire supérieure ou d'une mâchoire inférieure les unes par rapport aux autres, dans lequel la position des dents (Z) les unes par rapport aux autres n'est pas modifiable pendant l'assemblage informatique pour donner le modèle de denture numérique (G).

7. Procédé selon au moins l'une des revendications précédentes, dans lequel la saisie numérique des données de position (D_{P}) de la denture (S) s'effectue soit par scannage d'une empreinte négative mécanique de la denture (S) qui est réalisée par impression d'au moins les sommets de la dentition (S) dans une masse malléable, soit s'effectue d'après une photo bidimensionnelle ou tridimensionnelle (F) de la denture (S).

8. Procédé selon au moins l'une des revendications précédentes, **caractérisé en ce que** lors de l'enregistrement d'image, les données d'image (D_{B}) et les données de position (D_{P}) sont fusionnées les unes aux autres.

9. Procédé selon au moins l'une des revendications précédentes, **caractérisé en ce que** les données spécifiques de surface du modèle de référence (R) peuvent être modifiées de telle sorte qu'elles sont complétées avec des données d'image (D_{B}) du modèle de surface (O) ou **en ce qu'**elles sont remplacées par les données d'image (D_{B}) du modèle de surface (O) ou déformées.

10. Procédé selon au moins l'une des revendications précédentes, dans lequel le modèle de référence (R) et le modèle de surface (O) se présentent respectivement comme des quantités ponctuelles dans un système de coordonnées tridimensionnel.

11. Procédé selon au moins l'une des revendications précédentes, dans lequel lors de l'assemblage informatique, le modèle de surface (O) est placé d'après des repères sur le modèle de référence (R).

12. Procédé selon au moins l'une des revendications précédentes, dans lequel, à partir de données d'image (D_{B}) au moins deux modèles de surface différents (O) sont produits, qui représentent respectivement essentiellement une dent (Z), dans lequel ces au moins deux modèles de surface (O) sont assemblés informatiquement lors de l'enregistrement d'image, de préférence indépendamment l'un de l'autre, avec le modèle de référence (R).

13. Dispositif de production d'un modèle dentaire numérique (G) en réalisant un procédé selon au moins l'une des revendications 1 à 12, avec
a. un premier dispositif de saisie (1) pour la saisie de données d'image (D_{B}) qui représentent au moins une portion de surface d'une dent (Z) ou d'une denture (S),
b. un ordinateur (3) qui produit à partir des données d'image (D_{B}) du premier dispositif de saisie (1) un modèle de surface (O), et
c. un deuxième dispositif de saisie (2) pour la saisie numérique de données de position (D_{P}) de la denture (S), dans lequel par le biais de l'ordinateur (3), un modèle de référence (R) peut être produit à partir des données de position (D_{P}),
dans lequel l'ordinateur (3) permet d'assembler le modèle de surface (O) et le modèle de référence (R) en un modèle dentaire numérique (G), dans lequel l'ordinateur (3) présente un dispositif d'enregistrement d'image (4) ou est relié à celui-ci par des signaux, dans lequel le modèle de surface (O) et le modèle de référence (R) peuvent être assemblés en un modèle dentaire numérique (G) par l'ordinateur (3) au moins du dispositif d'enregistrement d'images (4), **caractérisé en ce que** l'ordinateur (3) permet avant ou lors de l'assemblage, une subdivision des données de position (D_{P}) du modèle de référence (R) des dents en données non modifiables spécifiques de la position de dent et en données modifiables spécifiques de surface.
